# FASCICULE DE BREVET EUROPEEN

(11) **EP 2 118 144 B1**
(45) Date de publication et mention de la délivrance du brevet: **04.10.2017**
(21) Numéro de dépôt: 08761980.5
(22) Date de dépôt: 25.01.2008
(51) Int. Cl.: C08B 15/10, D21C 9/16, C08B 15/04, D21C 9/10

(54) **PROCEDE DE FONCTIONNALISATION DES FIBRES CELLULOSIQUES DES PÂTES À PAPIER**
VERFAHREN ZUR DERIVATISIERUNG VON CELLULOSEFASERN AUS PAPIERMASSE
METHOD FOR FUNCTIONALISING CELLULOSIC FIBRES FROM PAPER PULP

(30) Priorité: 14.02.2007 FR 0753244
(43) Date de publication de la demande: 18.11.2009
(73) Titulaire: ARKEMA FRANCE, 92700 Colombes (FR)
(72) Inventeur: CALAIS, Christophe, F-69330 Meyzieu (FR); LACHENAL, Dominique, F-38402 Saint Martin D'heres Cedex (FR); MORTHA, Gérard, F-38402 Saint Martin D'heres Cedex (FR)
(74) Mandataire: Gorintin, Sarah
(86) Numéro de dépôt international: PCT/FR2008/050115
(87) Numéro de publication internationale: WO 2008/104651

(56) Documents cités:
- WO-A-03/080925
- WO-A-03/084911
- DE-A1- 19 614 587
- SIPPOLA V O ET AL: "Bis(o-phenanthroline)copper-catalysed oxidation of lignin model compounds for oxygen bleaching of pulp" CATALYSIS TODAY, ELSEVIER, vol. 100, no. 3-4, 28 février 2005 (2005-02-28), pages 237-242, XP004850019 ISSN: 0920-5861
- KORPI H ET AL: "An efficient method to investigate metal-ligand combinations for oxygen bleaching" APPLIED CATALYSIS A: GENERAL, ELSEVIER SCIENCE, AMSTERDAM, NL, vol. 268, no. 1-2, 10 août 2004 (2004-08-10), pages 199-206, XP004512951 ISSN: 0926-860X
- GERMER ET AL: "Catalytic Oxygen Pulping" EUROPEAN WORKSHOP ON LIGNOCELLULOSTICS AND PULP; ADVANCES IN CHARACTERIZATOIN AND PROCESSING OF WOOD, NONWOODY AND SECONDARY FIBERSEUROPEAN WORKSHOP ON LIGNOCELLULOSTICS AND PULP, 1996, pages 412-416, XP008010940
- CHEMICAL ABSTRACTS, vol. 54, no. 2, 2006, Columbus, Ohio, US; abstract no.: 2006:935580, XP002450249 & GERMER, E I: "Study of superactive catalysis of oxygen-alkaline wood delignification by complexes of variable valence metals using copper (II) 1,10-phenanthrolinate as a model" IZVESTIYA VYSSHIKH UCHEBNYKH ZAVEDENII, LESNOI ZHURNAL, vol. 3, 2006, pages 82-90,
- DATABASE COMPENDEX [Online] ENGINEERING INFORMATION, INC., NEW YORK, NY, US; MARLIN N ET AL: "Use of o-phenanthroline as catalyst in hydrogen peroxide stages" XP002450868 Database accession no. E2006019624686 & APPITA ANNU. CONF.; APPITA ANNUAL CONFERENCE; 59TH APPITA ANNUAL CONFERENCE AND EXHIBITION, INCORPORATING THE 13TH ISWFPC: INTERNATIONAL SYMPOSIUM ON WOOD, FIBRE AND PULPING CHEMISTRY - PROCEEDINGS. APPITA CONFERENCE SESSIONS 2005, vol. 2, 2005, pages 29-34,

## Description

L'invention concerne un procédé de fonctionnalisation de fibres cellulosiques papetières.

La fonctionnalisation consiste en la création de fonctions carbonyle et plus particulièrement carboxyle, produites par oxydation des fonctions alcool naturellement présentes dans les carbohydrates, tels que par exemple les fibres cellulosiques papetières ou les amidons.

Le document WO 92/18542 décrit l'oxydation des carbohydrates dans un milieu aqueux alcalin en utilisant de l'oxygène gazeux et en présence d'un ion métallique choisi dans le groupe VIII du tableau périodique, et d'une substance agissant comme ligand de l'ion métallique. Ce document enseigne que l'ion métallique est de préférence introduit dans le milieu alcalin sous forme de sel soluble. Il enseigne en outre que le ligand est de préférence une amine polydentate.

Le document US 6136041 divulgue l'emploi d'un additif pour activer les solutions de blanchiment des fibres lignocellulosiques dans des conditions oxydantes. Ce document enseigne que l'additif peut être choisi parmi les phénanthrolines et polypyridyles.

Le document WO 03/080925 décrit une étape de délignification et de préblanchiment dans laquelle l'oxygène est mis en oeuvre en association avec du peroxyde d'hydrogène en présence d'un complexe phénanthroline-cuivre. Le procédé de délignification et de blanchiment des pâtes à papier chimiques consiste à soumettre, après cuisson, les pâtes à plusieurs étapes de traitement délignifiant et/ou de blanchiment. Les premières étapes consistent essentiellement à parfaire la délignification résultant de la cuisson et les étapes suivantes sont des étapes de blanchiment.

Généralement, la phase d'achèvement de la délignification après cuisson (aussi appelée préblanchiment) est constituée d'une à deux étapes de délignification avec des réactifs, tels que par exemple l'oxygène (stade O) ou l'oxygène en association avec du peroxyde d'hydrogène (stade Op), le dioxyde de chlore (stade D) et/ou l'ozone (stade Z). A l'issue des étapes de traitement délignifiant, la pâte à papier peut être soumise à un traitement aux réactifs alcalins, tels que par exemple la soude, permettant de solubiliser et d'extraire la lignine attaquée (stade d'extraction alcaline désignée par E). Ce traitement peut être mis en oeuvre en association avec de l'oxygène (stade Eo) ou en association avec le peroxyde d'hydrogène (stade Ep) ou en association avec l'oxygène et le peroxyde d'hydrogène (stade Eop). Ce traitement peut aussi être inséré entre les étapes de traitement délignifiant.

Enfin, la ou les étape(s) de blanchiment consistent à soumettre la pâte délignifiée et préblanchie à un traitement par des agents de blanchiment, tels que par exemple le dioxyde de chlore ou le peroxyde d'hydrogène. En général le blanchiment proprement dit concerne les pâtes ayant un indice kappa ≤ 6 et une blancheur ISO ≥ 60 % (c'est-à-dire obtenues après la délignification et le préblanchiment). L'indice kappa et la blancheur étant respectivement mesurés selon les normes ISO 302 et ISO 2470.

La demanderesse a maintenant mis au point un procédé de fonctionnalisation des pâtes papetières selon les revendications 1 et 2. Le complexe cuivre-phénanthroline peut être formé à partir d'un sel de cuivre et d'un ligand phénanthroline La concentration en phénanthroline est de préférence comprise entre 0,001 et 1 % et avantageusement entre 0,01 et 0,1 % en poids par rapport à la matière à fonctionnaliser.

La concentration en cuivre est de préférence comprise entre 0,0001 et 0,030 % (ou 1 et 300 ppm) et avantageusement entre 0,0001 et 0,015 % (ou 1 et 150 ppm) en poids par rapport à la matière à fonctionnaliser.

La concentration en oxydant est préférence comprise entre 1 et 20 % et avantageusement entre 2 et 10 % en poids par rapport à la matière à fonctionnaliser.

Comme agent oxydant, on peut citer notamment les peroxydes, en particulier le peroxyde d'hydrogène, les peracides, en particulier l'acide peracétique et l'acide performique, l'oxygène, l'ozone, le chlore, le dioxyde de chlore et l'hypochlorite de sodium. Le peroxyde d'hydrogène est avantageusement choisi comme oxydant.

La phénanthroline est de préférence choisie parmi la 1,10-phénanthroline, la 4,7-phénanthroline et la 1,7-phénanthroline ; la 1,10-phénanthroline est particulièrement préférée.

Selon une première variante de l'invention, le procédé comprend au moins une étape de délignification de la matière lignocellulosique suivie d'au moins une étape de blanchiment au cours de laquelle la matière cellulosique délignifiée est soumise à un traitement d'agent oxydant en présence d'un complexe cuivre-phénanthroline.

Selon une deuxième variante de l'invention, le procédé comprend au moins une étape de délignification de la matière lignocellulosique, au moins un stade d'extraction alcaline, au moins une étape de blanchiment et au moins un traitement d'agent oxydant en présence d'un complexe cuivre-phénanthroline, ce dernier pouvant être effectué au cours du stade d'extraction alcaline et/ou de l'étape de blanchiment. Le traitement d'agent oxydant en présence d'un complexe cuivre-phénanthroline est effectué sur de la pâte ayant un indice kappa ≤ 6 et une blancheur ISO ≥ 60 %, avantageusement sur de la pâte ayant un indice Kappa ≤ 2,5 et une blancheur ISO ≥ 75 % et plus avantageusement sur de la pâte ayant un indice Kappa ≤ 2 et une blancheur ISO ≥ 80 %.

Les réactifs pour l'étape de délignification peuvent être l'oxygène (stade O) ou l'oxygène en association avec du peroxyde d'hydrogène (stade Op), le dioxyde de chlore (stade D) et/ou l'ozone (stade Z).

L'étape de blanchiment peut être effectuée en présence du dioxyde de chlore et/ou du peroxyde d'hydrogène.

La température de traitement au moyen d'agent oxydant en présence d'un complexe cuivre-phénanthroline est de préférence inférieure à 85°C et avantageusement comprise entre 35 et 65° C.

La durée de traitement dépend de la température choisie, et est de préférence inférieure à 1 heure.

La consistance de la pâte lors du traitement est de préférence comprise entre 5 et 20 % en poids et le milieu réactionnel est de préférence aqueux. Le pH du milieu réactionnel est avantageusement compris entre 9 et 12.

La présente invention convient à tout type de pâte à papier (pâte mécanique, pâte chimique, pâte recyclée), de préférence la pâte à papier chimique.

Les pâtes à papier chimiques ou pâtes chimiques sont celles obtenues par cuisson de matières lignocellulosiques notamment du bois. Parmi les pâtes chimiques on distingue, les pâtes Kraft ou sulfate, les pâtes au sulfite ou au bisulfite, les pâtes semi-chimiques ou au sulfite neutre, les pâtes après cuisson avec un solvant comme celles obtenues par les procédés ORGANOSOLV (ULLMAN'S ENCYCLOPEDIA of Industrial Chemistry, 5th Edition, vol. A. 18, 1991, pages 568 et 569), les pâtes sulfites-anthraquinones.

Tous les types de bois conviennent : les bois de résineux comme les diverses espèces de pins et sapins, les bois de feuillus comme par exemple le bouleau, le peuplier, le hêtre et l'eucalyptus.

Les pâtes ainsi fonctionnalisées peuvent ensuite être réticulées pour conduire à une meilleure résistance du produit final recherché.

Le procédé de fonctionnalisation selon la présente invention présente l'avantage d'être facilement incorporé dans une ligne classique de traitement de pâtes papetières et permet d'éviter l'emploi d'additifs coûteux et inefficaces.

### PARTIE EXPERIMENTALE

Les pâtes soumises au traitement d'agent oxydant en présence du complexe cuivre-phénanthroline ont un indice kappa < 1 et une blancheur ISO > 85 %. Ces pâtes préalablement délignifiées et blanchies, sont d'origine industrielle :
- Pâte blanchie de linters de coton (exemple 1), constituée quasi-exclusivement de cellulose pure et contenant très peu d'hémicelluloses (< 0,5%)
- Pâte kraft blanchie de résineux (exemples 2, 4 et 5) (résineux mélangés)
- Pâte kraft blanchie de feuillus (exemples 3 et 6) (feuillus mélangés).

### Exemples 1 à 3

L'agent oxydant utilisé est le peroxyde d'hydrogène et la quantité mise en jeu est de 6 % en poids par rapport à la pâte à traiter. La quantité du complexe cuivre-phénanthroline mise en jeu est de 0,1 % en poids par rapport à la pâte à traiter. La consistance de la pâte est de 6 % en poids et 2 % en poids de soude a été ajouté à la pâte. La température de traitement est de 45°C et la durée est de 20 min.

Le mode opératoire suivant est appliqué : la pâte est dispersée dans l'eau puis introduite en sac plastique. Les réactifs sont ensuite introduits et mélangés à la pâte dans l'ordre suivant : catalyseur (complexe Cu(Phen)₂²⁺), solution de soude, solution de peroxyde d'hydrogène, de sorte que le stade de fonctionnalisation s'effectue à la consistance désirée. Le sac est ensuite scellé et immergé dans un bain-marie à la température et pendant la durée choisies.

Le taux de carboxyles mesuré avant et après fonctionnalisation dans les conditions décrites ci-dessus est reporté dans le **tableau 1**. Ce taux de carboxyle est mesuré selon la méthode au bleu de méthylène (Tappi standard T 237, Wilson W. K., Mandel, J. "Détermination of Carboxyl in Cellulose", Tappi 44 (2), 131 (1961)).

**Tableau 1 : Résultats des essais de fonctionnalisation sur trois pâtes industrielles.**

| | exemple 1 | exemple 2 | exemple 3 |
|---|---|---|---|
| Taux de carboxyle initial (meq/100g) | 8 | 8 | 12 |
| Taux de carboxyle final (meq/100g) | 25 | 28 | 27 |

### Exemple 4

On opère comme dans l'exemple 3 sauf que la durée est de 50 minutes. Le taux de carboxyle final obtenu est de 45 meq/100g.

### Exemples 5-6 (réticulation des pâtes fonctionnalisées)

Après le traitement de fonctionnalisation, les pâtes ont été réticulées par traitement thermique à 120°C en présence de dihydrogénophosphate de sodium. L'exemple 5 concerne la réticulation de la pâte obtenue dans l'exemple 2 alors que l'exemple 6 concerne la réticulation de la pâte obtenue dans l'exemple 3. Le tableau 2 donne les variations des propriétés des pâtes obtenues après fonctionnalisation + réticulation. Ces variations sont données en % de la valeur obtenue en l'absence de fonctionnalisation.

**Tableau 2 : Evolution des caractéristiques mécaniques des pâtes réticulées après un traitement de fonctionnalisation.**

| | exemple 5 | exemple 6 |
|---|---|---|
| Volume massique | - 0,5 % | - 5,6 % |
| Indice de rigidité | + 43 % | + 72 % |
| Longueur de rupture (LR) | + 74 % | + 53 % |
| Indice d'allongement | + 75 % | + 57 % |
| Indice de déchirement | + 495 % | + 157 % |
| Indice d'éclatement | + 190 % | + 157 % |

## Revendications

1. Procédé de fonctionnalisation des fibres cellulosiques de pâtes à papier **caractérisé en ce qu'**il comprend au moins une étape de délignification de la matière lignocellulosique suivie d'au moins une étape de blanchiment au cours de laquelle la matière cellulosique délignifiée est soumise à un traitement d'agent oxydant effectué sur de la pâte ayant un indice kappa ≤6 mesuré selon la norme ISO 302 et une blancheur ISO≥60% mesurée selon la norme ISO 2470 en présence d'un complexe cuivre-phénanthroline.

2. Procédé de fonctionnalisation des fibres cellulosiques de pâtes à papier **caractérisé en ce qu'**il comprend au moins une étape de délignification de la matière lignocellulosique, au moins un stade d'extraction alcaline, au moins une étape de blanchiment et au moins un traitement d'agent oxydant en présence d'un complexe cuivre-phénanthroline, ce dernier étant effectué au cours du stade d'extraction alcaline et/ou de l'étape de blanchiment.

3. Procédé selon la revendication 2, **caractérisé en ce que** le traitement d'agent oxydant est effectué sur de la pâte ayant un indice kappa ≤6 mesuré selon la norme ISO 302 et une blancheur ISO ≥ 60 % mesurée selon la norme ISO 2470.

4. Procédé selon l'une quelconque des revendications 1 à 3, **caractérisé en ce que** l'agent oxydant est le peroxyde d'hydrogène.

5. Procédé selon l'une quelconque des revendications 1 à 4, **caractérisé en ce que** la température de traitement est inférieure à 85°C.

6. Procédé selon l'une quelconque des revendications 2 à 5, **caractérisé en ce que** le(s) réactif(s) pour l'étape de délignification est (sont) l'oxygène (stade 0) ou l'oxygène en association avec du peroxyde d'hydrogène (stade Op), le dioxyde de chlore (stade D) et/ou l'ozone (stade Z).

7. Procédé selon l'une quelconque des revendications 2 à 6, **caractérisé en ce que** l'étape de blanchiment peut être effectuée en présence du dioxyde de chlore et/ou peroxyde d'hydrogène.

8. Procédé selon l'une quelconque des revendications 2 à 7, **caractérisé en ce que** la pâte à papier est de type chimique.

9. Procédé selon l'une quelconque des revendications 2 à 8, **caractérisé en ce qu'**après la fonctionnalisation, les pâtes sont réticulées.

## Patentansprüche

1. Verfahren zum Funktionalisieren der Cellulosefasern aus Papiermasse, **dadurch gekennzeichnet, dass** es mindestens einen Schritt des Delignifizierens des Ligno-Cellulosematerials aufweist, auf den mindestens ein Bleichschritt folgt, bei dem das delignifizierte Cellulosematerial einer Oxidationsmittelbehandlung unterzogen wird, die auf Masse mit einer Kappa-Zahl von ≤ 6, gemessen nach der Norm ISO 302, und einem ISO-Weißgrad von ≥ 60 %, gemessen nach der Norm ISO 2470, in Gegenwart eines Kupfer-Phenanthrolin-Komplexes durchgeführt wird.

2. Verfahren zum Funktionalisieren der Cellulosefasern aus Papiermasse, **dadurch gekennzeichnet, dass** es mindestens einen Schritt des Delignifizierens des Ligno-Cellulosematerials, mindestens eine alkalische Extraktionsstufe, mindestens einen Bleichschritt und mindestens eine Oxidationsmittelbehandlung in Gegenwart eines Kupfer-Phenanthrolin-Komplexes aufweist, wobei diese Letztere bei der alkalischen Extraktionsstufe und/oder dem Bleichschritt durchgeführt wird.

3. Verfahren nach Anspruch 2, **dadurch gekennzeichnet, dass** die Oxidationsmittelbehandlung auf Masse mit einer Kappa-Zahl von ≤ 6, gemessen nach der Norm ISO 302, und einem ISO-Weißgrad von ≥ 60 %, gemessen nach der Norm ISO 2470, durchgeführt wird.

4. Verfahren nach einem der Ansprüche 1 bis 3, **dadurch gekennzeichnet, dass** das Oxidationsmittel Wasserstoffperoxid ist.

5. Verfahren nach einem der Ansprüche 1 bis 4, **dadurch gekennzeichnet, dass** die Behandlungstemperatur niedriger als 85 °C ist.

6. Verfahren nach einem der Ansprüche 2 bis 5, **dadurch gekennzeichnet, dass** das Reagenz (die Reagenzien) für den Schritt des Delignifizierens Sauerstoff (Stufe 0) oder Sauerstoff in Verbindung mit Wasserstoffperoxid (Stufe Op), Chlordioxid (Stufe D) und/oder Ozon (Stufe Z) ist (sind).

7. Verfahren nach einem der Ansprüche 2 bis 6, **dadurch gekennzeichnet, dass** der Bleichschritt in Anwesenheit von Chlordioxid und/oder Wasserstoffperoxid durchgeführt werden kann.

8. Verfahren nach einem der Ansprüche 2 bis 7, **dadurch gekennzeichnet, dass** die Papiermasse vom chemischen Typ ist.

9. Verfahren nach einem der Ansprüche 2 bis 8, **dadurch gekennzeichnet, dass** die Massen nach dem Funktionalisieren vernetzt werden.

## Claims

1. Method for functionalizing cellulosic fibers of paper pulps **characterized in that** it comprises at least one step of delignification of the lignocellulosic material followed by at least one bleaching step during which the delignified cellulosic material is subjected to a treatment with an oxidizing agent carried out on pulp having a Kappa number ≤ 6 measured according to the standard ISO 302 and an ISO brightness ≥ 60% measured according to the standard ISO 2470 in the presence of a copper-phenanthroline complex.

2. Method for functionalizing cellulosic fibres of paper pulps **characterized in that** it comprises at least one step of delignification of the lignocellulosic material, at least one alkaline extraction stage, at least one bleaching step and at least one treatment with oxidizing agent in the presence of a copper-phenanthroline complex, the latter being carried out during the alkaline extraction stage and/or the bleaching step.

3. Method according to Claim 2, **characterized in that** the oxidizing agent treatment is carried out on pulp having a Kappa number ≤ 6 measured according to the standard ISO 302 and an ISO brightness ≥ 60% measured according to the standard ISO 2470.

4. Method according to any one of Claims 1 to 3, **characterized in that** the oxidizing agent is hydrogen peroxide.

5. Method according to any one of Claims 1 to 4, **characterized in that** the treatment temperature is lower than 85°C.

6. Method according to any one of Claims 2 to 5, **characterized in that** the reagent(s) for the delignification step is (are) oxygen (stage 0) or oxygen in combination with hydrogen peroxide (stage Op), chlorine dioxide (stage D) and/or ozone (stage Z).

7. Method according to any one of Claims 2 to 6, **characterized in that** the bleaching step can be carried out in the presence of chlorine dioxide and/or hydrogen peroxide.

8. Method according to any one of Claims 2 to 7, **characterized in that** the paper pulp is of the chemical type.

9. Method according to any one of Claims 2 to 8, **characterized in that** after the functionalization, the pulps are crosslinked.
